Europäisches Patentamt

European Patent Office

Office européen des brevets

(19)

(11) Publication number: **0 134 226**
**B1**

# (12) EUROPEAN PATENT SPECIFICATION

(45) Date of publication of patent specification: **08.06.88**

(21) Application number: **84900551.7**

(22) Date of filing: **16.01.84**

(86) International application number:
**PCT/SE84/00009**

(87) International publication number:
**WO 84/02938 02.08.84 Gazette 84/18**

(51) Int. Cl.⁴: **E 02 B 15/04**

(54) **COLLECTOR APPARATUS.**

(30) Priority: **17.01.83 SE 8300189**

(43) Date of publication of application:
**20.03.85 Bulletin 85/12**

(45) Publication of the grant of the patent:
**08.06.88 Bulletin 88/23**

(84) Designated Contracting States:
**BE DE FR GB NL**

(56) References cited:
**DE-A-3 205 007**
**GB-A-2 007 516**
**SE-B- 394 204**

(73) Proprietor: **EK, Kenneth**
**PL 6148 Hagby**
**S-388 00 Ljungbyholm (SE)**

(73) Proprietor: **HAMMARSTEDT, Ulf**
**Björkuddevägen 23**
**S-393 64 Kalmar (SE)**

(72) Inventor: **EK, Kenneth**
**PL 6148 Hagby**
**S-388 00 Ljungbyholm (SE)**
Inventor: **HAMMARSTEDT, Ulf**
**Björkuddevägen 23**
**S-393 64 Kalmar (SE)**

(74) Representative: **Siebmanns, Hubertus et al**
**Götalands Patentbyra AB Box 154**
**S-561 22 Huskvarna (SE)**

Courier Press, Leamington Spa, England.

## Description

The present invention relates generally to means of removing, by picking up in a mechanical fashion, from a liquid body solid materials and/or materials not dissolved but present in a liquid state in said liquid body. The invention relates more specifically to an apparatus designed to be used to collect and remove oil at sea and in beach areas, to decontaminate liquid bodies contaminated with not dissolved chemicals, to treat waste water, to be used as a dredger or as a supplement to it, as a fishing tackle, particularly for shrimps, etc.

The invention particularly relates to a collector apparatus designed to be used to remove oil, especially unrefined oils, even emulsified oils having a large water content, but also generally to remove not dissolved chemicals, particularly pulverous ones, which can be removed and collected by means designed to fight oil discharges.

The principal objective of the present invention is to remedy the deficiencies of the presently used devices for oil separation and removal, improve the efficiency, i.e., increase the speed of the oil separation process and lower the energy consumption. A second objective of the invention is to avoid damages to the environment caused by the separation and removal process itself. A third objective of the invention is to lessen the dependence of the separation and removal process itself. A third objective of the invention is to lessen the dependence of the separation and removal process on the weather conditions, wind, wave movements, temperature and on the spreading of the material to be separated and removed on the surface of the liquid body and also down into it.

According to the present invention, surprisingly, all the objectives mentioned above can be attained to a satisfactory degree by means of a collector apparatus with a rotating collector portion mainly consisting of a net material. The collector apparatus is brought along a body of water contaminated with oil or any other material insoluble in water and continuously picks up water and oil, separates the picked up amount of oil from the water and removes the separated oil to a collecting vessel.

The characterizing features of the collector apparatus of the present invention are that it comprises:—

a shaft, which is horizontally and rotatably disposed in a frame and which is driven by a first driving means;

two spaced side portions made of a stiff net material, fixedly mounted on said shaft in planes generally perpendicular thereto;

a collector portion comprising a rectangular sheet of stiff net material, helically bent over approximately 360° around said shaft with an outer edge and an inner edge parallel to the shaft, said collector portion being fastened between said two side portions, by attachment of its other two edges to said side portions;

a cylindrical enclosure, fixedly attached to the frame and having upwardly facing openings, the enclosure being arranged such that the inner edge of the collector portion strokes the cylindrical outer surface thereof, when the assembly of shaft, side portions and collector portion rotates;

a screw, coaxial with said shaft and disposed within said enclosure, the screw being provided with a second driving means and arranged to remove material, which has been collected during the rotation of the assembly of shaft, side portions and collector portion;

means connected to said enclosure for the removal of said material.

The collector portion or wheel is rotated, in operation, with a certain oil collecting speed by means of said first driving means and said screw is rotated by means of said second driving means with such a speed, that all the collected amount of oil is removed from said screw enclosure. The collector wheel as well as the screw are coaxially and rotatably mounted in bearings in a frame, which is installed on a boat, a barge, a raft or the like. The inner edge of the helically shaped net material strokes the enclosure, when the wheel rotates. A certain amount of oil is collected in the opening of the wheel each time the opening reaches the oil layer in the body of water. The water turns turbulent close to the net material and turbulent water layers substantially free from oil are shaped on each side of the net material and thus, collected oil is not allowed to leave the inner areas of the apparatus through the walls of the net material. Said walls are kept clean to a satisfactory degree due to the turbulence in the water close to the net walls. Due to the helical shape of the net material between the two side portions and the water turbulence at the net walls, the collected oil increasingly approaches said enclosure and screw, since the inner edge of the helically shaped net strokes the cylindrically shaped surface of the enclosure. The forwarded oil finally easily flows into the enclosure through its openings and is removed by said screw in said enclosure, through the enclosure itself and through means connected to the enclosure for the continued removal of the oil material to a collecting vessel or the like.

Due to the turbulence in the water close to the net material even separation between quite thin-bodied unrefined oils and water can be attained as well as the retaining of the oil inside the helically shaped portion of the apparatus until it reaches the enclosure and the screw. This is also true as to emulsified oils having a large water content. Pulverous chemicals in liquid bodies can be easily picked up and can be separated from the liquid by the collector apparatus of the present invention.

Due to the thickness of an oil layer, the speed of the frame in relation to a body of water, such wheel dimensions of the apparatus as length and diameter, weather conditions etc., the rotational speed of the wheel can vary considerably. Preferably it is 1—100 rev./min.

The shaft of the collector apparatus can be positioned above, in and below the surface of the body of water. Oil which has been spilled onto the surface soon starts to sink. The collector apparatus of the present invention is particularly well adapted to pick up sinking oil. The collector apparatus is lowered along legs of the frame, e.g. by means of hydraulically driven plungers.

Spilled oil often accumulates along beaches. In case the beaches are shallow, the collector apparatus with its enclosed screw and frame can be installed on a truck or a motor vehicle having caterpillar treads and the shaft of the collector apparatus be kept at a suitable level in relation to the water surface during the oil collecting process.

It is also feasible to advantageously employ the collector wheel of the present invention to purify raw sewage or the like, to employ it as a dredger or as a supplemental device to a dredger, as fishing tackle, e.g., for shrimps etc.

The present invention is described in more detail in the following text, references being made to the enclosed partly schematic drawings, wherein:

Figure 1 is a side view of a preferred embodiment of a collector apparatus according to the invention;

Figure 2 is a sectional side view taken along a line perpendicular to the shaft of the collector apparatus;

Figure 3 is a front view of the collector apparatus, the net material only being indicated by its edges, contour lines and openings, thus unveiling the screw and its enclosure; and

Figure 4 is a perspective view of the collector apparatus.

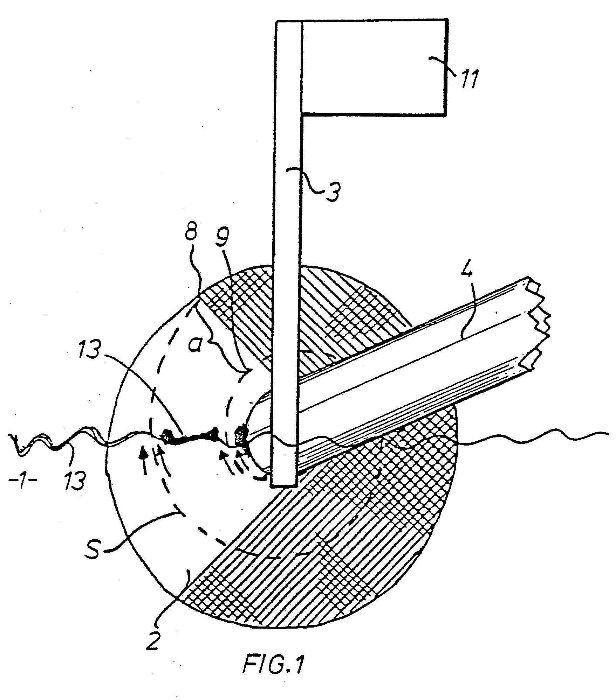

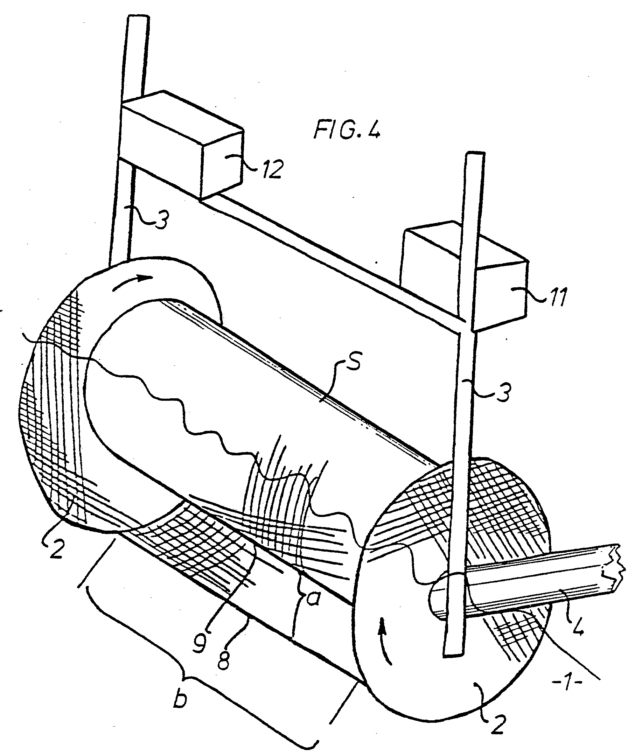

Referring to the drawings, Figures 1—4, it is shown how a collector apparatus of the present invention operates. It is lowered with its collector portion or wheel into a body of water 1, which is contaminated with oil 13. One of two side portions 2 is shown in Figure 1. It is made of an expanded metal net material, but only certain portions of the net material are shown in order to more clearly show the helically shaped net portions between the two side portions 2. The net material is produced by cutting a plurality of small parallel slits in a sheet material of stainless steel, and subsequently drawing out the sheet material in order to develop said slits into small mainly square openings, the length of the sides of said sheet openings being 0.5—10 mm. A frame portion 3, which is disposed in a vertical direction, conceals side portion 2 in Figure 1. Frame portion 3 holds in bearings (not shown) the shaft (not shown), around which the collector wheel is rotatably mounted. Frame portion 3 also supports a hydraulic motor 11, which drives the shaft and the collector wheel.

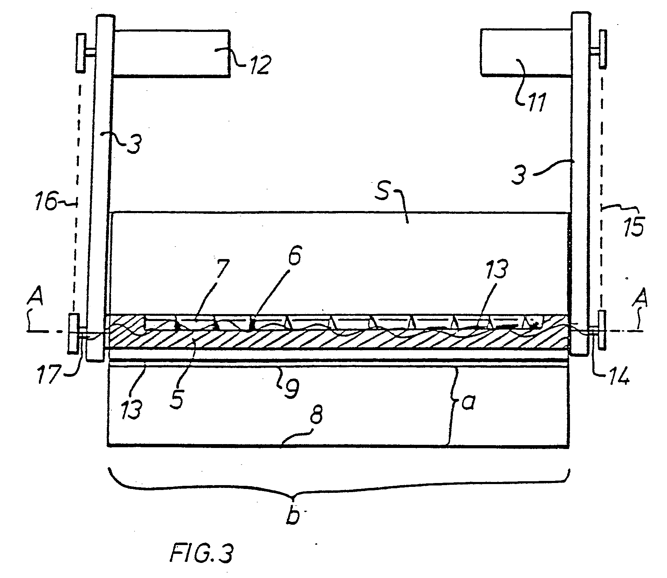

In Figure 3, a motor 12 is shown, which drives an oil propelling screw 6. The frame portions, which carry motors 11 and 12 and their transmission means 14, 15 and 16, 17 respectively, are only shown schematically in the drawings.

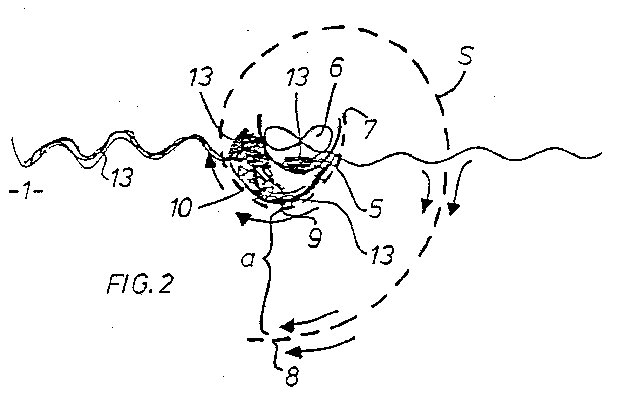

In Figure 3 collected and separated oil is shown in a forwarding enclosure 5, which extends between the central portions of the two side portions 2. An amount of oil 13 inside enclosure 5 (Figure 2) is propelled by a screw 6 towards a tube 4 and is removed through the tube to a collecting vessel (not shown).

The helically shaped metal nets shown in Figures 1—4 has an inner and an outer edge 7 and 8 respectively. There is an opening in the collector portion between edge 8 and a line 9 in the nets parallel to it, the opening having a breadth a. A plane through this opening is vertically disposed in Figures 2—4, but the collector portion rotates in the direction, which the arrows in Figure 2 indicate. After a rotation of 90° the collector apparatus picks up oil 13 on a surface a·b (the breadth of the opening times the length of the wheel). At the same time volume 10 defined by the metal net and the water surface decreased sharply and the better part of the oil, which was found in that space, was forced into enclosure 5 and is now forwarded by screw 6 towards tube 4. Newly collected oil 13 is kept in place on the shrinking water surface between two metal net surfaces due to upwardly turbulent streams, which the movement of the metal net in the body of water is creating. Earlier collected oil 13, which was found deeper inside the apparatus, in volume 10, when opening 8, 9 had a vertical position, was kept in place in the same manner.

**Claims**

1. Apparatus for collecting and separating in a mechanical fashion one or several solid and/or liquid insoluble materials (13) in a liquid body (1) comprising:—

a shaft, which is horizontally and rotatably disposed in a frame (3) and which is driven by a first driving means (11);

two spaced side portions (2) made of a stiff net material, fixedly mounted on said shaft in planes generally perpendicular thereto;

a collector portion comprising a rectangular sheet(s) of stiff net material, helically bent over approximately 360° around said shaft with an outer edge (8) and an inner edge (7) parallel to the shaft, said collector portion being fastened between said two side portions (2) by attachment of its other two edges to said side portions;

a cylindrical enclosure (5), fixedly attached to the frame (3) and having upwardly facing openings, the enclosure being arranged such that the inner edge (7) of the collector portion strokes the cylindrical outer surface thereof, when the assembly of shaft, side portions (2) and collector portion rotates;

a screw (6), coaxial with said shaft and disposed within said enclosure (5), the screw being provided with a second driving means (12) and arranged to remove material (13), which has been collected during the rotation of the assembly of shaft, side portions (2) and collector portion;

means (4) connected to said enclosure (5) for the removal of said material (13).

2. The apparatus set forth in Claim 1, wherein said material to be collected and separated is an unrefined oil, particularly an emulsified oil having a large water content.

3. The apparatus set forth in Claim 1, wherein said material to be collected and separated is a liquid or pulverous and water-insoluble chemical.

4. The apparatus set forth in any one of Claims 1—3, wherein the collector portion rotates with a speed of between 1 and 100 rev./min.

5. The apparatus set forth in any one of Claims 1—4, wherein the shaft of said collector apparatus during collection and separation is situated above, in or below the surface of the liquid body (1).

6. The apparatus set forth in any one of Claims 1—5, wherein said frame (3) is carried by a boat, a barge, a raft or the like or by a motor vehicle being provided with wheels or caterpillar treads, when the collector apparatus is used to collect and separate oil or chemicals in shallow beach areas.

7. The apparatus set forth in any one of Claims 1—6, wherein said stiff net material, which said side portions (2) and said helically shaped collector portion(s) consist of, is made of a sheet of stainless steel, which is cut with small slits and subsqeuently drawn out in order to transform said slits into openings in the sheet having a substantially square area.

8. The apparatus set forth in Claim 7, wherein the length of the sides of said sheet openings is 0.5—10 mm.

## Patentansprüche

1. Vorrichtung zum mechanischen Aufsammeln und Abtrennen eines oder mehrerer fester und/oder flüssiger unlöslicher Stoffe (13), die in einem flüssigen Medium (1) vorliegen, gekennzeichnet durch:

eine in einem Rahmen (3) horizontal und drehbar angeordnet Achse, die durch einen ersten Antrieb (11) getrieben wird;

zwei auf Abstand voneinander angordnete Giebelteile (2) aus einem steifen, netzartigen Material, welche auf genannter Achse im wesentlichen rechtwinklig zu dieser angebracht sind;

einen Sammler bestehend aus einer rechteckigen Bahn (S) aus einem steifen, netzartigen Material, welches spiralförmig über einen Winkel von etwa 360° um die Achse herumgewunden ist, wobei dessen Aussenkante (8) und Innenkante (7) parallel zur Achse angeordnet sind, und welches zwischen den beiden Giebelteilen (2) angeordnet und mit seinen beiden anderen Kanten an diesen befestigt ist;

eine zylinderförmige Hülle (5), die am Rahmen (3) fest angebracht ist und nach oben gerichtete Öffnungen aufweist, wobei die Hülle derart angeordnet ist, dass der innere Rand (7) des Sammlers die zylindrische Oberfläche der Hülle überstreicht, während die Einheit bestehend aus Achse, Giebelteilen und Sammler rotiert;

einen zur Achse koaxialen und in genannter Hülle (5) angeordneten schraubenförmigen Teil (6), der mit einem zweiten Antrieb (12) versehen und dazu vorgesehen ist, Stoffe (13) zu entfernen, die während der Rotation von Achse, Giebelteilen und Sammler gesammelt werden;

mit der Hülle verbundene Mittel (4) zum Entfernen genannter Stoffe (13).

2. Vorrichtung nach Anspruch 1, dadurch gekennzeichnet, dass der aufzusammelnde und abzutrennende Stoff aus unraffiniertem Öl, insbesondere emulgiertem Öl mit einem hohen Wassergehalt, besteht.

3. Vorrichtung nach Anspruch 1, dadurch gekennzeichnet, dass der aufzusammelnde und abzutrennende Stoff aus flüssigen oder pulverisierten und wasserunlöslichen Chemikalien besteht.

4. Vorrichtung nach einem der Ansprüche 1 bis 3, dadurch gekennzeichnet, dass der Sammler mit einer Geschwindigkeit zwischen 1 und 100 Umdrehungen/Min. rotiert.

5. Vorrichtung nach einem der Ansprüche 1 bis 4, dadurch gekennzeichnet, dass die Achse des Sammlers während des Aufsammelns und Abtrennens über, in oder unter der Oberfläche des flüssigen Mediums (1) angeordnet ist.

6. Vorrichtung nach einem der Ansprüche 1 bis 5, dadurch gekennzeichnet, dass der Rahmen (3) von einem Boot, einem Schiff, einem Floss und ähnlichen Schwimmköpern oder von einem mit Rädern oder Raupenketten ausgerüsteten Kraftfahrzeug geführt wird, wenn der Sammler zum Aufsammeln und Abtrennen von Öl oder Chemikalien in seichten Uferbereichen verwendet wird.

7. Vorrichtung nach einem der Ansprüche 1 bis 6, dadurch gekennzeichnet, dass das steife, netzartige Material, aus dem die Giebelteile (2) und der spiralförmig gewundene Körper (7, 8, 9) bestehen, aus bahnförmigem, korrosionsfreien Stahl gefertigt ist, in dem kleine Schlitze eingeschnitten worden sind, und der daraufhin gezogen worden ist, so dass die Schlitze sich zu Öffnungen in der Stahlplatte mit im wesentlichen quadratischen Querschnitt verformt haben.

8. Vorrichtung nach Anspruch 7, dadurch gekennzeichnet, dass die Randbreite der Öffnungen in der Stahlplatte 0,5—10 mm beträgt.

## Revendications

1. Dispositif pour recueillir et séparer mécaniquement un ou plusieurs matériaux solides et/ou solides insolubles (13) dans une masse liquide (1) comprenant:—

un arbre, qui est monté horizontalement et à rotation dans un bâti (3) et qui est entraîné par un premier moyen d'entraînement (11);

deux portions latérales espacées (2) en un matériau à mailles rigide, montées de façon à en être solidaires, sur l'arbre dans des plans généralement perpendiculaires à celui-ci;

une portion collectrice comprenant une feuille rectangulaire (S) d'un matériau à mailles rigide, courbé en hélice sur environ 360° autour de cet arbre avec un bord extérieur (8) et un bord intérieur (7) parallèles à l'arbre, cette portion collectrice étant fixée entre les deux portions latérales (2) par fixation de ses deux autres bords sur ces portions latérales;

une enceinte cylindrique (5), solidarisée du bâti (3) et ayant des ouvertures orientés vers le haut, l'enceinte étant disposée de telle sorte que le bord intérieur (7) de la portion collectrice vienne heurter sa surface extérieure cylindrique, lors de la rotation de l'ensemble de l'arbre, des portions latérales (2) et de la portion collectrice;

une vis (6) coaxiale à l'arbre et disposée à l'intérieur de l'enceinte (5), la vis étant entraînée par un deuxième moyen d'entraînement (12) et étant disposée pour évacuer les produits (13) qui ont été recueillis lors de la rotation de l'ensemble de l'arbre, des portions latérales (2) et de la portion collectrice; et

des moyens (4) raccordés à l'enceinte (5) pour l'évacuation de ces produits (13).

2. Dispositif selon la revendication 1, dans lequel les produits à recueillir et à séparer sont des hydrocarbures non raffinés, notamment des hydrocarbures émulsifiés ayant une forte teneur en eau.

3. Dispositif selon la revendication 1, dans lequel les produits à recueillir et à séparer sont des produits chimiques liquides ou pulvérulents insolubles dans l'eau.

4. Dispositif selon l'une quelconque des revendications précédentes, dans lequel la portion collectrice tourne à une vitesse comprise entre 1 et 100 tours/mn.

5. Dispositif selon l'une quelconque des revendications précédentes, dans lequel l'arbre du dispositif collecteur est situé, lors du ramassage et de la séparation, au-dessus, dans ou sous la surface de la masse liquide (1).

6. Dispositif selon l'une quelconque des revendications précédentes, dans lequel le bâti (3) est porté par un bateau, une peniche, un radeau oul'analogue, ou par un véhicule à moteur équipé de roues ou de chenilles, lorsque le dispositif collecteur est utilisé pour ramasser et séparer des produits chimiques ou des hydrocarbures sur des rivages peu profonds.

7. Dispositif selon l'une quelconque des revendications précédentes, dans lequel le matériau à mailles rigide, qui constitue les portions latérales (2) et la portion collectrice en forme d'hélice (S), est fait d'une tôle d'acier inoxydable qui est entaillée avec de petites entailles et étirée ultérieurement afin de transformer ces entailles en ouvertures dans la tôle ayant une surface pratiquement carrée.

8. Dispositif selon la revendication 7, dans lequel la longueur des côtés des ouvertures de la tôle est comprise entre 0,5 et 10 mm.

FIG.1

FIG.2

FIG.3

FIG. 4